(19) **Europäisches Patentamt / European Patent Office / Office européen des brevets**

(11) **EP 4 679 535 A1**

(12) **EUROPEAN PATENT APPLICATION**
published in accordance with Art. 153(4) EPC

(43) Date of publication:
**14.01.2026 Bulletin 2026/03**

(21) Application number: **23926459.1**

(22) Date of filing: **18.12.2023**

(51) International Patent Classification (IPC):
*H01M 4/62* (2006.01)　　*H01B 1/00* (2006.01)
*H01B 1/24* (2006.01)　　*H01G 11/36* (2013.01)
*H01M 4/13* (2010.01)　　*H01M 4/36* (2006.01)
*H01M 4/139* (2010.01)

(52) Cooperative Patent Classification (CPC):
**H01B 1/00; H01B 1/24; H01G 11/36; H01M 4/13; H01M 4/139; H01M 4/36; H01M 4/62;** Y02E 60/10

(86) International application number:
**PCT/JP2023/045201**

(87) International publication number:
**WO 2024/185255 (12.09.2024 Gazette 2024/37)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **06.03.2023 JP 2023033786**

(71) Applicant: **Sanyo Color Works, Ltd.**
**Himeji-shi,**
**Hyogo 670-0966 (JP)**

(72) Inventors:
• **UEMURA, Yu**
  **Himeji-shi, Hyogo 670-0966 (JP)**
• **TANAKA, Yuki**
  **Himeji-shi, Hyogo 670-0966 (JP)**

(74) Representative: **Mathys & Squire**
**Theatinerstraße 8**
**80333 München (DE)**

(54) **CARBON NANOTUBE-CONTAINING ELECTRODE POWDER, ELECTRODE MIXTURE PASTE, ELECTRODE FOR POWER STORAGE DEVICE, AND POWER STORAGE DEVICE**

(57) To provide a CNT-containing powder for an electrode, which has an excellent action of improving electrical conductivity when used as an electrically conductive aid for an electrode of a power storage device, a composite for an electrode and an electrode mixture paste capable of obtaining an electrode having excellent electrical conductivity by using the CNT-containing powder for an electrode, and an electrode for a power storage device and a power storage device using the electrode mixture paste. A CNT-containing powder for an electrode including a carbon nanotube (CNT), a dispersant, and water, in which 100 to 200 parts by weight of the dispersant is contained with respect to 100 parts by weight of the CNT, a water content is 10 to 20 wt%, and an index value of volume resistivity is 61% or less. (Index value of volume resistivity = $100 \times$ (volume resistivity of electrode X prepared using CNT-containing powder for electrode)/(volume resistivity of electrode Y prepared using powder obtained by drying CNT-containing powder for electrode to water content of less than 1 wt%))

*FIG. 1*

**Description**

TECHNICAL FIELD

The present invention relates to a carbon nanotube (CNT)-containing powder for an electrode, a method for producing the same, an electrode mixture paste containing the CNT-containing powder for an electrode, and an electrode for a power storage device and a power storage device including an electrode mixture layer produced using the electrode mixture paste.

BACKGROUND ART

Conventionally, a carbon nanotube (hereinafter, may be referred to as a "CNT") and the like are known as a substance excellent in various properties such as electrical conductivity, thermal conductivity, and mechanical properties. In recent years, three main materials of an electrode active material, a binder, and an electrically conductive aid have been used for a positive electrode of a lithium ion secondary battery. Among these materials, carbon black (acetylene black) has been used as an electrically conductive aid for solving a problem that an active material occupying 90% or more of the positive electrode mixture has poor electrical conductivity. In recent years, a CNT having electrical conductivity superior to that of carbon black has attracted attention.

In order for a CNT to effectively act as an electrically conductive aid, a CNT needs to be sufficiently dispersed in an electrode active material. However, since a CNT is likely to aggregate and have a property of being hardly dispersed, an attempt has been made to prepare a CNT dispersion containing a CNT and a dispersant in advance and mix the CNT dispersion with an electrode active material or the like in order to improve the dispersibility of the CNT.

For example, Patent Literature 1 discloses a fine carbon fiber aggregate for redispersion obtained by adding a carbon fiber and a dispersant that is solid at least at room temperature ($20 \pm 10°C$) to an aqueous dispersion medium and removing the dispersion medium from a dispersion system in which the carbon fiber is isolated and dispersed in the dispersion medium, in which the carbon fiber is aggregated and solidified in a state of maintaining independent dispersibility, the content of the fine carbon fiber is 0.01 to 99.5 mass%, the content of the dispersant is 0.1 to 99.5 mass%, the moisture content is less than 10 mass%, and the dispersant is any one selected from (1) a surfactant capable of forming spherical, rod-like or plate-like micelles having a diameter of 5 to 2000 nm in an aqueous solution, (2) a water-soluble polymer having a weight average molecular weight of 10,000 to 50 million, and (3) a combination of cyclodextrin and fullerene.

However, the carbon fiber aggregate for redispersion described in Patent Literature 1 maintains solid properties in order to exhibit good handleability, and it is most desirable that the moisture content thereof is substantially zero. At this time, a dispersion is prepared by dispersing the carbon fiber aggregate for dispersion in water, but the content of the surfactant with respect to the CNT was kept low (Synthesis

Example 2).

Patent Literature 2 describes a masterbatch in the form of an agglomerated solid including: (a) carbon nanofibers and/or nanotubes and/or carbon black in a content of 15 wt% to 40 wt%, preferably 20 wt% to 35 wt% with respect to the total weight of the masterbatch, (b) at least one solvent, and (c) 1 wt% to 40 wt%, preferably 2 wt% to 30 wt% with respect to the total weight of the masterbatch, of at least one polymer binder.

However, in the masterbatch described in Patent Literature 2, water is finally removed (Examples 6 and 7).

CITATION LIST

PATENT LITERATURE

Patent Literature 1: JP-A-2008-274502
Patent Literature 2: JP-T-2013-522439

SUMMARY OF INVENTION

PROBLEMS TO BE SOLVED BY INVENTION

Therefore, the present inventors have studied a CNT-containing powder for an electrode having excellent electrical conductivity, and found that there is a technical relationship in which the volume resistivity of the produced electrode changes depending on the water content and that the CNT-containing powder for an electrode having excellent electrical conductivity can be discriminated by the index value with which the volume resistivity of the produced electrode can be evaluated.

Therefore, an object of the present invention is to provide a CNT-containing powder for an electrode, which has an excellent action of improving electrical conductivity when used as an electrically conductive aid for an electrode of a power storage device.

Another object of the present invention is to provide a composite for an electrode and an electrode mixture paste capable of obtaining an electrode excellent in electrical conductivity by using the CNT-containing powder for an electrode, and an electrode for a power storage device and a power storage device using the electrode mixture paste.

SOLUTION TO PROBLEMS

An embodiment of the present invention relates to

a CNT-containing powder for an electrode including a carbon nanotube (CNT), a dispersant, and water, in which 100 to 200 parts by weight of the dispersant is contained with respect to 100 parts by weight of the CNT, a water content is 10 to 20 wt%, and an index value of volume resistivity calculated according to formula (1) below is 61% or less.

Index value of volume resistivity = 100 $\times$ (volume resistivity of electrode X prepared using CNT-containing powder for electrode)/(volume resistivity of electrode Y prepared using powder obtained by drying CNT-containing powder for electrode to water content of less than 1 wt%) $\cdots$ formula (1)

In an embodiment of the present invention, the dispersant may be attached to the surface of the CNT.

Another embodiment of the present invention relates to a composite for an electrode containing the CNT-containing powder for an electrode and an inorganic compound, in which the inorganic compound is an electrode active material and/or a solid electrolyte.

Another embodiment of the present invention relates to an electrode mixture paste including the CNT-containing powder for an electrode, a solvent, and an electrode active material and/or a binder.

Another embodiment of the present invention relates to an electrode for a power storage device including an electrode mixture layer formed using the electrode mixture paste.

Another embodiment of the present invention relates to a power storage device including an electrode mixture layer formed using the electrode mixture paste.

EFFECTS OF INVENTION

Since the CNT-containing powder for an electrode of the present invention can obtain excellent electrical conductivity in an electrode, an electrode for a power storage device obtained using a composite for an electrode or an electrode mixture paste containing the CNT-containing powder for an electrode has low surface resistivity and volume resistivity, and is excellent in electrical conductivity. Therefore, the power storage device obtained using the CNT-containing powder for an electrode of the present invention can remarkably improve the discharge capacity.

BRIEF DESCRIPTION OF DRAWINGS

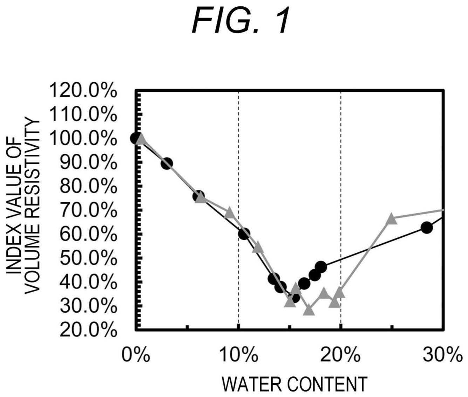

Fig. 1 is a graph showing the relationship between the water content of the CNT-containing powder for an electrode prepared in Examples 1 and 3 and the index value of the volume resistivity of the formula (1) in the evaluation electrode measured in Examples 2 and 4.

DESCRIPTION OF EMBODIMENTS

Hereinafter, embodiments of the present invention will be described.

<CNT-containing powder for electrode>

A CNT-containing powder for an electrode (hereinafter, also referred to as a CNT powder or CNT powder for an electrode of the present invention) according to embodiments of the present invention includes a carbon nanotube (CNT), a dispersant, and water.

Examples of the CNT used in the present invention include a single-walled carbon tube (SWCNT) and a multi-walled carbon nanotube (MWCNT).

The SWCNT and the MWCNT are not particularly limited as long as the SWCNT and the MWCNT can be used for an electrode of a power storage device, and for example, the diameter, length, and aspect ratio of the SWCNT or the MWCNT are not particularly limited.

In the present invention, the SWCNT and the MWCNT may be used singly or in combination.

In the present invention, the dispersant is not particularly limited as long as it is a dispersant that can be used for an electrode, and a dispersant having water solubility or water affinity is preferable from the viewpoint of exhibiting good dispersibility.

As the dispersant having water solubility or water affinity, polysaccharides, polystyrene sulfonic acid and salts thereof, polyvinyl pyrrolidone, polyvinyl alcohol, polyvinyl acetal, polyamide, polyamideimide, polyimide, polyacrylamide, polyacrylate, polyacrylonitrile, nitrile rubber, and hydrides thereof can be used.

Examples of the polysaccharides include cellulose-based derivatives and chitosan. Examples of the cellulose-based derivatives include carboxymethyl cellulose (CMC), carboxyethyl cellulose, aminoethyl cellulose, hydroxyethyl cellulose, hydroxypropyl cellulose, hydroxypropyl methyl cellulose, methyl cellulose, and salts thereof.

From the viewpoint of the dispersibility of the CNT, the cellulose-based derivatives preferably has a weight average molecular weight of 50,000 to 300,000.

In the CNT powder of the present invention, the content of the dispersant is adjusted so as to be within the range of 100 to 200 parts by weight with respect to 100 parts by weight of the CNT.

When the content of the dispersant is less than the above range, dispersion of the CNT may be insufficient. Conversely, when the content is more than the above range, the electrical conductivity of the electrode may be significantly deteriorated.

In addition, the CNT powder of the present invention has a structure in which the dispersant is attached to the surface of the CNT. By having such a structure, the CNT powder of the present invention has excellent dispersibility in an electrode material, and can widely adhere to the surface of an electrode material such as an electrode active material or a solid electrolyte so as to exhibit excellent electrical conductivity.

The presence of the structure can be confirmed, for example, by dispersing the CNT powder of the present invention in water as a solvent and examining the weight of the dispersant released. When the weight of the released dispersant is less than 10% of the weight of the dispersant contained in the CNT powder, it can be determined that the CNT powder has the above structure.

The CNT powder of the present invention has a water content adjusted to 10 to 20 wt%. Since the CNT powder of the present invention is adjusted to have a water content in the range as described above, the aggregation of the CNT is weak as compared with, for example, a CNT powder adjusted to have a lower water content such as a water content of 1%, and thus the CNT is easily untied when an electrode mixture paste is prepared, which is excellent in that the electrical conductivity of the prepared electrode is improved.

The water content can be examined based on a known method, and the measurement method is not particularly limited. Specifically, the water content can be a loss on drying determined by a prescription in accordance with JIS K0067:1992.

In the CNT powder of the present invention, an index value of volume resistivity calculated according to the following formula (1) is 61% or less.

Index value of volume resistivity = 100 × (volume resistivity of electrode X prepared using CNT-containing powder for electrode)/(volume resistivity of electrode Y prepared using powder obtained by drying CNT-containing powder for electrode to water content of less than 1 wt%)        formula (1)

The index value of volume resistivity indicates the ratio of the volume resistivity of an electrode X prepared using the CNT-containing powder for an electrode to the volume resistivity of an electrode Y prepared using a powder obtained by drying the CNT-containing powder for an electrode to a water content of less than 1 wt%.

The lower the index value, the lower the efficiently adjusted volume resistivity of the CNT-containing powder for an electrode, indicating that the electrical conductivity of the resulting electrode is more excellent.

For the powder obtained by drying the CNT-containing powder for an electrode to a water content of less than 1 wt%, the water content only has to be in a range of 0 wt% or more and less than 1 wt%, and is not particularly limited.

In the present invention, the index value is preferably adjusted to 61% or less, and preferably 50% or less.

On the other hand, when the index value exceeds 61%, it cannot be said that the effect of reducing the volume resistivity is excellent.

When the index value is measured, compositions other than the CNT-containing powder of the electrode X and the electrode Y are adjusted to be the same.

The electrode X and the electrode Y can be produced in the same manner as the electrode for a power storage device described later.

The measurement conditions of the volume resistivity (Ω·cm) of the electrode X and the electrode Y are adjusted to be the same. For example, the measurements may be performed under the same condition using the same measurement device.

The measurement device is not particularly limited as long as it is a device for an electrode.

In the CNT powder of the present invention, an example of the method for adjusting the index value to 61% or less is a method of measuring the water content of the CNT powder and adjusting the water content to 10 to 20 wt%.

Commercial products and conventional products (dispersions) have the following disadvantages.

1. In general, it is known that a dispersion has poor stability and a short product life because a rheology change due to aggregation or precipitation of CNTs, a concentration change due to volatilization of a solvent, and the like easily occur as compared with the CNT powder of the present invention.
2. Since the product life is short, it is necessary to create a dispersion factory near a battery factory in order to reuse a solvent recovered and regenerated in the battery factory in the dispersion factory.
3. In many cases, the content of CNTs in commercial products is generally 6 wt% or less, and when the content of CNTs is low in this manner, the prescription of the electrode mixture is limited.
4. Since the CNT content is low, and the volume and weight (per CNT unit weight) are large, the cost of transportation and storage is high.

On the other hand, the CNT powder of the present invention has the following advantages.

1. A rheological change due to aggregation and precipitation of CNTs, a concentration change due to volatilization of a solvent, and the like do not occur, and stability is good.
2. Since the product life is long, and a solvent recovered and regenerated in a battery factory is not reused in a dispersion factory, it is unnecessary to create the dispersion factory near the battery factory.
3. Since the CNT content is high, it is considered that there is almost no restriction in terms of prescription when the electrode mixture is produced.
4. Since the CNT content is high, and the volume and weight (per unit weight of CNT) are small, transportation and storage costs are low.

The CNT powder of the present invention can be prepared by kneading the CNT, the dispersant, and water to prepare a paste-like kneaded product, and then drying the kneaded product to adjust the water content to be in the range of 10 to 20 wt%.

The amount of water to be blended in the CNT and the dispersant is not particularly limited as long as a paste-like kneaded product is obtained, and for example, water can be used such that the concentration of the CNT in the kneaded product is 10 to 25 wt%.

Examples of the mixer used for the kneading include a planetary mixer, a kneader, an extrusion type kneader, and a thin-film swirling system high-speed mixer.

The planetary mixer is a machine that mixes materials by material retention and shear stress caused by centrifugal force generated by rotating and revolving (planetary motion), and is also called a rotating and revolving mixer.

The planetary mixer only has to be a commercially available manufacturing apparatus, and is not particularly limited.

The conditions for preparing the kneaded product are not particularly limited.

The method for drying the kneaded product obtained as described above is not particularly limited, and only has to be performed by a device capable of adjusting the temperature to a temperature equal to or higher than the temperature at which the solvent volatilizes, a device capable of removing the solvent by decompression, a freeze-drying device, or the like. For example, from the viewpoint of efficient drying, it is preferable to volatilize water while increasing the treatment temperature in the planetary mixer and kneading the kneaded product.

When the kneaded product is insufficiently dried when taken out from the device for drying the kneaded product, additional drying may be performed. The CNT powder of the present invention has a property of hardly aggregating even in such a drying step. In addition, water may be added to the CNT powder having a low water content in order to achieve a water content of 10 to 20 wt%, but it is desirable to adjust the water content to the above range by drying the kneaded product (in a state where the water content is high).

<Composite for electrode>

The composite for an electrode of the present invention includes the CNT powder for an electrode and an inorganic compound, and the inorganic compound is an electrode active material and/or a solid electrolyte.

The composite for an electrode can be used as a material for producing an electrode.

For example, an electrode mixture paste can be produced by mixing and kneading the composite for an electrode containing an electrode active material with carbon black, a binder, and a solvent.

Examples of the inorganic compound include an electrode active material and a solid electrolyte.

The electrode active material includes an active material used for either a positive electrode or a negative electrode.

Examples of the positive electrode active material include layered oxides ($LiCoO_2$, $LiNiO_2$, $LiNi_{1/3}Mn_{1/3}Co_{1/3}$, etc.), spinel type oxides ($LiMnO_2$, $LiMn_{1.6}Ni_{0.4}O_4$, etc.), olivine type oxides ($LiFePO_4$, $Fe_2(SO_4)_3$, $LiCoPO_4$, etc.), and reverse spinel type oxides ($LiCoVO_4$, $LiNiVO_4$, etc.) used for a positive electrode of a lithium ion battery.

Examples of the negative electrode active material include carbon-based (graphite, non-graphitizable carbon, amorphous carbon, a polymer compound fired body (for example, a body obtained by firing and carbonizing a phenol resin, a furan resin, etc.), cokes (for example, pitch coke, needle coke, petroleum coke, etc.), carbon fibers, etc.), oxide-based ($Li_2TiO_3$, $TiNb_xO$, etc.), and silicon-based (Si, SiO) used for a negative electrode of a lithium ion battery.

The positive electrode active material or the negative electrode active material can be used singly or in combination of two or more kinds thereof.

The solid electrolyte is a solid capable of conducting only ions, and only has to be any solid electrolyte that can be used for a power storage device according to the type of the power storage device to be described later.

Examples of the solid electrolyte having lithium ion conductivity include the following.

· Oxide-based solid electrolyte: crystalline ($Li_{1.3}Al_{0.3}Ti_{1.7}(PO_4)_3$, $La_{0.51}Li_{0.34}TiO_{2.94}$, $Li_7La_3Zr_2O_{12}$, etc.), amorphous ($Li_{2.9}PO_{3.3}N_{0.46}$, etc.)
· Others ($Li_2Bi_2H_{12}$, $Li_3OCl_{0.5}Br_{0.5}$, etc.)

The content of the CNT-containing powder of the present invention in the composite for an electrode is not particularly limited, and may be appropriately adjusted according to the type of the inorganic compound, the type of the CNT, the type of the electrode to be applied, and the type of the power storage device to be applied. For example, in the case of a composite used for a negative electrode of a lithium ion secondary battery, the content of the CNT-containing powder only has to be 0.01 to 10 wt%.

The composite for an electrode can be produced by mixing the CNT-containing powder for an electrode with the inorganic compound.

The mixing is not particularly limited, and may be performed by any of a wet method and a dry method. Examples of the mixer used for the mixing include a planetary mixer, a kneader, an extrusion type kneader, and a thin-film swirling system high-speed mixer.

For example, a composite for an electrode containing an electrode active material as the inorganic compound can be produced by the following steps.

Homogenization step: A mixture is prepared by mixing an electrode active material, a CNT powder for an electrode, and a solvent.

Defibration step: The mixture is kneaded using the mixer.

Finishing step: The solvent is removed by drying or the like as necessary.

The solvent is not particularly limited, and examples thereof include alcohol-based solvents such as methanol, ethanol, normal propyl alcohol, isopropyl alcohol (IPA), butyl alcohol, octyl alcohol, cyclohexanol, allyl alcohol, benzyl alcohol, cresol, and furfuryl alcohol,

alcohol ether-based solvents such as propylene glycol monomethyl ether (PM), ethylene glycol monomethyl ether, ethylene glycol monoethyl ether, ethylene glycol tertiary butyl ether (ETB), ethylene glycol monobutyl ether, 3-methoxy-3-methyl-1-butanol, ethylene glycol monopropyl ether, ethylene glycol phenyl ether, diethylene glycol monobutyl ether, triethylene glycol monobutyl ether, and dipropylene glycol monomethyl ether,

amine-based solvents such as N,N-dimethylaminopropylamine and diethylenetriamine,

ether-based solvents such as methyl phenyl ether (anisole), tetrahydrofuran, dioxane, and ethylene glycol dimethyl ether,

glycol ester-based solvents such as propylene glycol monomethyl ether acetate (PMA), ethylene glycol monoethyl ether acetate, 3-methoxybutyl acetate and ethylene glycol diacetate,

ketone-based solvents such as acetone, methyl ethyl ketone (MEK), cyclopentanone, and cyclohexanone,

aromatic hydrocarbon-based solvents such as benzene, toluene, xylene, cymene, and mesitylene,

aprotic polar solvents such as N-methyl-2-pyrrolidone (NMP), dimethyl sulfoxide, and dimethylformamide,

aliphatic hydrocarbon-based solvents such as pentane, normal hexane, octane, cyclopentane, and cyclohexane,

an aldehyde-based solvent such as furfural,

ester solvents such as butyl acetate, ethyl acetate, methyl acetate, butyl propionate, ethylene glycol monoethyl ether acetate, 3-methoxybutyl acetate, ethylene glycol diacetate, dimethyl carbonate, diethyl carbonate, ethylene carbonate, propylene carbonate, and butyl butyrate,

polyol-based solvents such as glycerol, ethylene glycol, and diethylene glycol, and

water.

Among them, when NMP or water is used, good defibration of the CNT can be exhibited.

In the defibration step, by adjusting the concentration of an electrode active material to the concentration (C, unit: wt%) of an electrode active material calculated according to the following formula (2) from the tap density (DTap) (unit: g/cm$^3$) of the electrode active material while adding a solvent as necessary, the defibration of the CNT when kneaded with the solvent can be improved, and the uniform dispersibility of the CNT can be improved.

$$C = 7.0 \times DTap + \alpha \cdots \text{formula (2)}$$

(in the formula, $60 \leq \alpha \leq 70$.)

The tap density of the electrode active material can be measured by the prescription according to JIS K 5101-12-2. For a commercially available electrode active material, a numerical value described in the catalog may be used.

<Electrode mixture paste>

The electrode mixture paste of the present invention includes the CNT powder for an electrode, a solvent, and an electrode active material and/or a binder.

The content of the CNT powder for an electrode in the electrode mixture paste of the present invention only has to be appropriately adjusted according to the type of the power storage device to be applied, from the viewpoint of the improvement of electrical conductivity and the capacity of the power storage device.

The solvent contained in the electrode mixture paste of the present invention only has to be appropriately selected according to the type of the active material or the binder to be used. The solvent is not particularly limited, and examples thereof include aprotic polar solvents such as NMP, dimethyl sulfoxide, dimethylformamide, and γ-butyrolactone,

aliphatic hydrocarbon-based solvents such as pentane, normal hexane, octane, cyclopentane, and cyclohexane,

aromatic hydrocarbon-based solvents such as benzene, toluene, xylene, cymene, and mesitylene,

an aldehyde-based solvent such as furfural,

ketone-based solvents such as acetone, MEK, cyclopentanone, and cyclohexanone,

glycol ester-based solvents such as PMA, ethylene glycol monoethyl ether acetate, 3-methoxybutyl acetate, and ethylene glycol diacetate,

ester-based solvents such as butyl acetate, ethyl acetate, methyl acetate, butyl propionate, dimethyl carbonate, diethyl carbonate, ethylene carbonate, propylene carbonate, and butyl butyrate,

ether-based solvents such as tetrahydrofuran, dioxane, ethylene glycol dimethyl ether, and methyl phenyl ether (anisole),

alcohol-based solvents such as methanol, ethanol, normal propyl alcohol, IPA, butyl alcohol, octyl alcohol, cyclohexanol, allyl alcohol, benzyl alcohol, cresol, and furfuryl alcohol,

polyol-based solvents such as glycerol, ethylene glycol, and diethylene glycol,

alcohol ether-based solvents such as ethylene glycol monomethyl ether, ethylene glycol monoethyl ether, ethylene glycol monobutyl ether, PM, and diethylene glycol monobutyl ether, and water.

Two or more of these solvents may be used in combination.

The electrode active material is not particularly limited as long as it can be used for the composite for an electrode.

The content of the electrode active material in the electrode mixture paste of the present invention only has to be appropriately adjusted according to the type of the power storage device to be applied, from the viewpoint of the improvement of electrical conductivity and the capacity of the power storage device.

The binder may be any binder that can be used for an electrode for a power storage device, and examples thereof include polyvinylidene fluoride (PVDF), polyvinyl alcohol, polyvinyl acetal, an acrylic resin, polyvinyl acetate, polyvinyl chloride, polystyrene, polyvinyl ether, polyvinyl pyrrolidone (PVP), styrene butadiene rubber (SBR), and carboxymethyl cellulose. These may be modified with various functional groups, and as the functional group, a polar functional group such as an acidic group or a basic group can be suitably used. The binder may be used singly or in combination of two or more kinds thereof.

The weight average molecular weight of the binder is not particularly limited, and for example, a binder having a weight average molecular weight within the range of 110,000 to 5 million can be suitably used.

The content of the binder in the electrode mixture paste of the present invention only has to be appropriately adjusted according to the type of the power storage device to be applied, from the viewpoint of the improvement of electrical conductivity and the capacity of the power storage device.

The electrode mixture paste of the present invention can be obtained by kneading the CNT powder for an electrode, a solvent, and an electrode active material and/or a binder. The kneading method is not particularly limited, and examples of the mixer used for kneading include a planetary mixer, a kneader, an extrusion type kneader, and a thin-film swirling system high-speed mixer.

In the mixing order, the respective components may be mixed at the same time, or the CNT powder for an electrode and an electrode active material and/or a binder may be mixed in order with a solvent. This order is not particularly limited, and for example, a mixture (composite for an electrode) of the CNT powder for an electrode and an electrode active material may be gradually added. Alternatively, a binder may be mixed and dissolved in a solvent in advance.

The ratio of the electrode component in the electrode mixture paste, that is, the ratio of the CNT powder for an electrode, the electrode active material, and the binder in the electrode mixture paste only has to be appropriately adjusted according to the type of the power storage device to be applied, from the viewpoint of the thickness of the obtained electrode and coatability.

For example, in the case of an electrode for an air battery, an electrode mixture paste may be produced so as not to contain an active material, and in the case of an electrode for a clay type lithium ion battery, an electrode mixture paste may be produced so as not to contain a binder.

The electrode mixture paste can be prepared by, for example, the following steps.

Homogenization step: A mixture is prepared by mixing an electrode active material, a CNT powder for an electrode, and a solvent.

Defibration step: The mixture is kneaded using the mixer.

Finishing step: A binder and, if necessary, a solvent are added.

In the defibration step, by adjusting the concentration of an electrode active material to the concentration (C, unit: wt%) of an electrode active material calculated according to the formula (2) from the tap density (DTap) (unit: $g/cm^3$) of the electrode active material while adding a solvent as necessary, the defibration of the CNT when kneaded with the solvent can be improved, and the uniform dispersibility of the CNT can be improved.

The solvent is not particularly limited, and examples thereof include alcohol-based solvents such as methanol, ethanol, normal propyl alcohol, IPA, butyl alcohol, octyl alcohol, cyclohexanol, allyl alcohol, benzyl alcohol, cresol, and furfuryl alcohol,

alcohol ether-based solvents such as PM, ethylene glycol monomethyl ether, ethylene glycol monoethyl ether, ETB, ethylene glycol monobutyl ether, 3-methoxy-3-methyl-1-butanol, ethylene glycol monopropyl ether, ethylene glycol phenyl ether, diethylene glycol monobutyl ether, triethylene glycol monobutyl ether, and dipropylene glycol monomethyl ether,

amine-based solvents such as N,N-dimethylaminopropylamine and diethylenetriamine,

ether-based solvents such as methyl phenyl ether (anisole), tetrahydrofuran, dioxane, and ethylene glycol dimethyl ether,

glycol ester-based solvents such as PMA, ethylene glycol monoethyl ether acetate, 3-methoxybutyl acetate, and ethylene glycol diacetate,

ketone-based solvents such as acetone, MEK, cyclopentanone, and cyclohexanone,

aromatic hydrocarbon-based solvents such as benzene, toluene, xylene, cymene, and mesitylene,

an aprotic polar solvent such as NMP, dimethyl sulfoxide, and dimethylformamide,

aliphatic hydrocarbon-based solvents such as pentane, normal hexane, octane, cyclopentane, and cyclohexane,

an aldehyde-based solvent such as furfural,

ester solvents such as butyl acetate, ethyl acetate, methyl acetate, butyl propionate, ethylene glycol monoethyl ether acetate, 3-methoxybutyl acetate, ethylene glycol diacetate, dimethyl carbonate, diethyl carbonate, ethylene carbonate, propylene carbonate, and butyl butyrate,

polyol-based solvents such as glycerol, ethylene glycol, and diethylene glycol, and

water.

Among them, when NMP or water is used, good defibration of the CNT can be exhibited.

The tap density of the electrode active material can be measured by the prescription according to JIS K 5101-12-2. For a commercially available electrode active material, a numerical value described in the catalog may be used.

<Electrode for power storage device>

The electrode for a power storage device (hereinafter, also referred to as the electrode of the present invention) of the present invention includes an electrode mixture layer formed using the electrode mixture paste of the present invention, and is specifically obtained by applying the electrode mixture paste of the present invention to a current collector and drying the obtained product. By the drying, the solvent in the electrode mixture paste of the present invention is removed, an electrode mixture layer is formed on the current collector, and an electrode is obtained.

In the electrode of the present invention, examples of the current collector include Al, Ni, Cu, and stainless steel.

Examples of the shape of the current collector include a foil shape, a flat plate shape, a mesh shape, a net shape, a lath shape, a punching metal shape, an embossed shape, and a combination thereof (for example, a mesh-like flat plate or the like). Further, irregularities may be formed on the surface of the current collector by etching treatment.

The method for applying the electrode mixture paste of the present invention to the current collector is not particularly limited.

Examples of the method include a slit die coating method, a screen coating method, a curtain coating method, a knife coating method, a gravure coating method, and an electrostatic spraying method. The drying performed after the application may be performed by heat treatment, air blow drying, vacuum drying, or the like. When drying is performed by heat treatment, the temperature is usually about 50 to 150°C. In addition, pressing may be performed after drying. Examples of the pressing method include die pressing and roll pressing. The electrode of the present invention can be produced by the method described above.

The thickness of the electrode is usually about 5 to 500 μm.

<Power storage device>

The power storage device of the present invention includes an electrode mixture layer formed using the electrode mixture paste of the present invention. A specific example thereof is a liquid type or solid type power storage device including the electrode of the present invention in which an electrode mixture layer formed of the electrode mixture paste of the present invention is formed.

Examples thereof include various electric storage devices such as cation redox secondary batteries (lithium ion battery, clay type lithium ion battery, sodium ion battery, multivalent metal ion battery, lithium sulfur battery, sulfide battery, conversion battery, redox flow battery, etc.), anion redox batteries (fluoride battery, chloride battery, zinc negative electrode battery, etc.), various all-solid-state batteries (sulfide-based, oxide-based, nitride-based, polymer-based, etc.), various air batteries (lithium air battery, zinc air battery, sodium air battery, etc.), various capacitors (lithium ion capacitor, electric double layer capacitor, etc.), and various fuel cells (solid polymer form, alkali form, etc.).

The power storage device of the present invention can be produced by a known method for producing a power storage device except that the electrode of the present invention is used. The structure of the electrode of the present invention included in the power storage device only has to be an appropriate structure according to the type of the power storage device as described above.

EXAMPLES

The materials used in Examples are as follows.

<CNT>

· "CNT" SWCNT (TUBALL) manufactured by OCSiAl

<Dispersant>

· "CMC 1110" CMC (CMC Daicel (registered trademark) 1110, weight average molecular weight: about 250,000) manufactured by Daicel Miraizu Ltd.
· "CEKOL 30" CMC (CEKOL30, weight average molecular weight: about 80,000) manufactured by Nouryon

<Inorganic compound: Electrode active material>

· "LTO" $Li_2TiO_3$ tap density: 1.18 g/cm$^3$

<Binder>

· "SBR" SBR (TRD2001) manufactured by JSR Corporation
· "CMC 2260" CMC (CMC Daicel (registered trademark) 2260) manufactured by Daicel Miraizu Ltd.

<Solvent>

· Water

(Example 1: Production of CNT-containing powder)

40 parts by weight of a CNT, 60 parts by weight of a dispersant (CMC1110), and 150 parts by weight of water were fed to a planetary mixer, and kneaded. Then, the resulting kneaded product (CNT concentration: 16 wt%) was dried to prepare a CNT-containing powder having a predetermined water content as described in Table 1.

(Example 2: Measurement of volume resistivity in electrode)

An evaluation electrode was produced using the CNT-containing powder having a predetermined water content described in Table 1.

Specifically, 56.84 wt% of LTO, 0.12 wt% of a CNT (derived from a CNT-containing powder), 0.18 wt% of CMC1110 (derived from a CNT-containing powder), 0.41 wt% of a binder (CMC2260), 1.17 wt% of a binder (SBR), and 41.28 wt% of water (including water derived from a CNT-containing powder) were mixed to prepare an electrode mixture paste.

Next, the obtained electrode mixture paste was applied to a PET sheet material so as to have a thickness of 0.05 mm to prepare an evaluation electrode.

For the obtained evaluation electrode, the surface resistivity was measured using Loresta-GX MCP-T700 (manufactured by Nittoseiko Analytech Co., Ltd.), and the film thickness was measured with a high-accuracy digimatic micrometer MDH-25MB (manufactured by Mitutoyo Corporation). The volume resistivity was determined by multiplying the surface resistivity by the film thickness.

Next, an index value of the volume resistivity was obtained according to the following formula (1).

Index value of volume resistivity = 100 × (volume resistivity of electrode X prepared using CNT-containing powder for electrode)/(volume resistivity of electrode Y prepared using powder obtained by drying CNT-containing powder for electrode to water content of less than 1 wt%)      formula (1)

An evaluation electrode prepared from a CNT-containing powder having a water content of 0 wt% was defined as an electrode Y.

The obtained results are shown in Table 1.

[Table 1]

| No. | Composition | | | Surface resistivity | Film thickness | Volume resistivity | Index value of volume resistivity |
|---|---|---|---|---|---|---|---|
| | Water content | CNT content | Dispersant content | $\Omega \cdot sq^{-1}$ | mm | $\Omega \cdot cm$ | |
| 1 | 0.0% | 40.0% | 60.0% | 2.43E+03 | 9.00E-02 | 2.18E+01 | 100.0% |
| 2 | 3.0% | 38.8% | 58.2% | 2.17E+03 | 9.00E-02 | 1.96E+01 | 89.5% |
| 3 | 6.1% | 37.6% | 56.3% | 1.95E+03 | 8.50E-02 | 1.66E+01 | 75.8% |
| 4 | 10.6% | 35.8% | 53.7% | 1.88E+03 | 6.99E-02 | 1.31E+01 | 60.1% |
| 5 | 13.5% | 34.6% | 51.9% | 1.29E+03 | 7.00E-02 | 9.05E+00 | 41.4% |
| 6 | 14.1% | 34.4% | 51.5% | 1.14E+03 | 7.27E-02 | 8.29E+00 | 37.9% |
| 7 | 15.4% | 33.8% | 50.7% | 9.03E+02 | 8.17E-02 | 7.38E+00 | 33.8% |
| 8 | 16.4% | 33.4% | 50.1% | 1.02E+03 | 8.41E-02 | 8.60E+00 | 39.4% |
| 9 | 17.5% | 33.0% | 49.5% | 1.17E+03 | 8.02E-02 | 9.38E+00 | 42.9% |

(continued)

| No. | Composition | | | Surface resistivity | Film thickness | Volume resistivity | Index value of volume resistivity |
|---|---|---|---|---|---|---|---|
| | Water content | CNT content | Dispersant content | $\Omega \cdot sq^{-1}$ | mm | $\Omega \cdot cm$ | |
| 10 | 18.1% | 32.8% | 49.2% | 1.24E+03 | 8.16E-02 | 1.01E+01 | 46.3% |
| 11 | 28.4% | 28.6% | 43.0% | 1.52E+03 | 9.00E-02 | 1.37E+01 | 62.7% |

(Example 3: Production of CNT-containing powder)

40 parts by weight of a CNT, 60 parts by weight of a dispersant (CEKOL30), and 150 parts by weight of water were fed to a planetary mixer, and kneaded. Then, the resulting kneaded product (CNT concentration: 16 wt%) was dried to prepare a CNT-containing powder having a predetermined water content as described in Table 2.

(Example 4: Measurement of volume resistivity in electrode)

An evaluation electrode was produced in the same manner as in Example 2 except that the CNT-containing powder having a predetermined water content described in Table 2 was used.
The surface resistivity and the film thickness of the obtained evaluation electrode were measured in the same manner as in Example 2 to determine the volume resistivity. Next, an index value of the volume resistivity was obtained according to the formula (1).
An evaluation electrode prepared from a CNT-containing powder having a water content of 0.5 wt% was defined as an electrode Y.
The obtained results are shown in Table 2.

[Table 2]

| No. | Composition | | | Surface resistivity | Film thickness | Volume resistivity | Index value of volume resistivity |
|---|---|---|---|---|---|---|---|
| | Water content | CNT content | Dispersant content | $\Omega \cdot sq^{-1}$ | mm | $\Omega \cdot cm$ | |
| 1 | 0.5% | 39.8% | 59.7% | 2.06E+03 | 4.72E-02 | 9.73E+00 | 100.0% |
| 2 | 6.3% | 37.5% | 56.2% | 1.43E+03 | 5.13E-02 | 7.35E+00 | 75.5% |
| 3 | 9.1% | 36.4% | 54.5% | 1.59E+03 | 4.23E-02 | 6.73E+00 | 69.2% |
| 4 | 11.9% | 35.2% | 52.9% | 1.27E+03 | 4.21E-02 | 5.34E+00 | 54.8% |
| 5 | 15.0% | 34.0% | 51.0% | 7.69E+02 | 4.06E-02 | 3.12E+00 | 32.0% |
| 6 | 15.6% | 33.8% | 50.6% | 5.62E+02 | 6.52E-02 | 3.66E+00 | 37.6% |
| 7 | 16.9% | 33.3% | 49.9% | 6.66E+02 | 4.18E-02 | 2.79E+00 | 28.6% |
| 8 | 18.3% | 32.7% | 49.0% | 8.30E+02 | 4.17E-02 | 3.46E+00 | 35.6% |
| 9 | 19.4% | 32.2% | 48.4% | 3.64E+02 | 8.50E-02 | 3.10E+00 | 31.8% |
| 10 | 19.8% | 32.1% | 48.1% | 8.38E+02 | 4.17E-02 | 3.50E+00 | 35.9% |
| 11 | 24.9% | 30.0% | 45.0% | 1.58E+03 | 4.09E-02 | 6.48E+00 | 66.6% |

From the results of Examples 1 to 4, the relationship between the water content of the CNT-containing powder and the index value of the volume resistivity is shown in the graph of Fig. 1. In the figure, circles indicate the results of Example 2, and triangles indicate the results of Example 4.
From the results shown in Tables 1 and 2 and Fig. 1, it is found that in the CNT-containing powder obtained in each of Examples 1 and 3, the index value of the volume resistivity is adjusted to 61% or less when the water content is 10 to 20 wt%.
It is found that the electrodes obtained from the CNT-containing powder in which the index value of the volume resistivity is adjusted to 61% or less have volume resistance suppressed to be lower than that of the CNT-containing powder having a water content of less than 1 wt%, and are excellent in electrical conductivity.

When the evaluation electrode using the CNT-containing powder having a water content within the range of 10 to 20 wt% was confirmed with a scanning electron microscope, it was confirmed that the CNT was fibrillated in all cases.

On the other hand, when the evaluation electrode using the CNT-containing powder having a water content of less than 10 wt% was observed with a scanning microscope, aggregation of the CNT had occurred. As a cause of this, it is considered that hydrogen bonds between the dispersant present on the surface of the CNT and moisture decrease, and hydrogen bonds with the dispersant present on the surface of other CNT occur.

In addition, even in the evaluation electrode using the CNT-containing powder having a water content of more than 20 wt%, aggregation of the CNT had occurred. This was considered to be because the CNT had been aggregated by hydrophobic interaction due to a large amount of moisture (high hydrophilicity) inside the powder.

When the CNT is aggregated as described above, the CNT is hard to be defibrated at the time of preparing the electrode mixture paste, and the performance of the CNT-containing powder as an electrically conductive aid tends to be deteriorated.

## Claims

1. A CNT-containing powder for an electrode comprising a carbon nanotube (CNT), a dispersant, and water, wherein

   100 to 200 parts by weight of the dispersant is contained with respect to 100 parts by weight of the CNT,
   a water content is 10 to 20 wt%, and
   an index value of volume resistivity calculated according to formula (1) below is 61% or less:

   Index value of volume resistivity = 100 × (volume resistivity of electrode X prepared using CNT-containing powder for electrode)/(volume resistivity of electrode Y prepared using powder obtained by drying CNT-containing powder for electrode to water content of less than 1 wt%)   formula (1).

2. The CNT-containing powder for an electrode according to claim 1, wherein the dispersant is attached to a surface of the CNT.

3. A composite for an electrode comprising the CNT-containing powder for an electrode according to claim 1 or 2 and an inorganic compound, wherein the inorganic compound is an electrode active material and/or a solid electrolyte.

4. An electrode mixture paste comprising the CNT-containing powder for an electrode according to claim 1 or 2, a solvent, and an electrode active material and/or a binder.

5. An electrode for a power storage device comprising an electrode mixture layer formed using the electrode mixture paste according to claim 4.

6. A power storage device comprising the electrode mixture layer formed using the electrode mixture paste according to claim 4.

## FIG. 1

## INTERNATIONAL SEARCH REPORT

| International application No. |
|---|
| **PCT/JP2023/045201** |

### A. CLASSIFICATION OF SUBJECT MATTER

*H01M 4/62*(2006.01)i; *H01B 1/00*(2006.01)i; *H01B 1/24*(2006.01)i; *H01G 11/36*(2013.01)i; *H01M 4/13*(2010.01)i; *H01M 4/36*(2006.01)i; *H01M 4/139*(2010.01)i

FI: H01M4/62 Z; H01B1/00 E; H01B1/24 Z; H01G11/36; H01M4/13; H01M4/139; H01M4/36 A

According to International Patent Classification (IPC) or to both national classification and IPC

### B. FIELDS SEARCHED

Minimum documentation searched (classification system followed by classification symbols)

H01M4/62; H01B1/00; H01B1/24; H01G11/36; H01M4/13; H01M4/36; H01M4/139

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

JSTPlus/JMEDPlus/JST7580 (JDreamIII); JSTChina (JDreamIII)

### C. DOCUMENTS CONSIDERED TO BE RELEVANT

| Category* | Citation of document, with indication, where appropriate, of the relevant passages | Relevant to claim No. |
|---|---|---|
| A | JP 2022-524181 A (BYK-CHEMIE GMBH) 28 April 2022 (2022-04-28)<br>entire text | 1-6 |
| A | JP 2021-031514 A (MITSUBISHI CORP.) 01 March 2021 (2021-03-01)<br>entire text | 1-6 |
| A | JP 2020-079342 A (DR GOO KK) 28 May 2020 (2020-05-28)<br>entire text | 1-6 |
| P, A | JP 2023-069017 A (TOYO INK SC HOLDINGS CO., LTD.) 18 May 2023 (2023-05-18)<br>entire text | 1-6 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **13 February 2024** | **27 February 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

INTERNATIONAL SEARCH REPORT
Information on patent family members

| | International application No. |
|---|---|
| | **PCT/JP2023/045201** |

| Patent document cited in search report | | | Publication date (day/month/year) | Patent family member(s) | | | Publication date (day/month/year) |
|---|---|---|---|---|---|---|---|
| JP | 2022-524181 | A | 28 April 2022 | US | 2022/0041852 | A1 | |
| | | | | entire text | | | |
| | | | | WO | 2020/173821 | A1 | |
| | | | | EP | 3931891 | A1 | |
| | | | | CN | 113474918 | A | |
| | | | | KR | 10-2021-0126076 | A | |
| JP | 2021-031514 | A | 01 March 2021 | JP | 6714134 | B1 | |
| | | | | entire text | | | |
| | | | | US | 2022/0315730 | A1 | |
| | | | | WO | 2021/033614 | A1 | |
| | | | | EP | 4015453 | A1 | |
| | | | | CN | 114651033 | A | |
| | | | | KR | 10-2022-0088408 | A | |
| JP | 2020-079342 | A | 28 May 2020 | WO | 2020/100842 | A1 | |
| | | | | entire text | | | |
| | | | | KR | 10-2021-0090604 | A | |
| JP | 2023-069017 | A | 18 May 2023 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008274502 A

- JP 2013522439 T